# EUROPEAN PATENT APPLICATION

(11) **EP 2 221 654 A1**
(43) Date of publication of application: **25.08.2010**
(21) Application number: 09305157.1
(22) Date of filing: 19.02.2009
(51) Int. Cl.: G02B 27/01

(54) **Head mounted display**

(71) Applicant: Thomson Licensing, 92130 Issy-les-Moulineaux (FR)
(72) Inventor: Winter, Marco, 30659 Hannover (DE)
(74) Representative: Lindemann, Robert

(57) **Abstract**

A head-mounted display (5) comprises electro-optic display means (6-9) for receiving an electronic video signal (RGBA), generating, from said electronic video signal (RGBA), a luminous signal and displaying to a user (3) a superimposed image in which the luminous signal is perceptible by the user in superposition with a real-world image. Control means (12; 22-35) are provided for judging, based on said electronic video signal (RGBA), a degree of alienation of the real-world image caused by the superposition and for reducing, at least temporally, the impact of the luminous signal on the superimposed image.

## Description

Head-mounted displays (or HMDs for short) are becoming increasingly popular as a tool for presenting to a user a highly realistic virtual reality and for giving him the illusion to be moving in this virtual reality, because movements of the user can be detected and can be taken account of by changing the perspective of images displayed to him in the HMD with a degree of realism unachieved by stationary display screens. More recently, HMDs have also been considered as a tool for displaying to a user not a purely virtual reality but a kind of "enhanced reality" in which images of the real world as seen by the user are superimposed with computer-generated images.

Applications of these "reality-enhancing" HMDs are e.g. in the field of assistance systems for vehicle drivers, aircraft pilots etc., and a luminous signal which the HMD superimposes upon the real-world image seen by the driver or pilot may represent instrument readings, emphasized representations of traffic signs recognized by a computer-based image processing system in images of the driver's environment taken by camera, shapes of obstacles recognized e.g. by a radar system when driving through fog, heavy snowfall etc.

All these applications have in common that they rely on sophisticated software for calculating an image which is to be superimposed upon the real-world image seen by the driver. A failure of the software can cause the calculated image to be unintelligible, and to prevent rather than assist the driver's perception of the outside world. In the worst case, a crash of the software might cause a blank screen to be generated, which might block the user's view on the outside world. Obviously, any such failure can cause heavy accidents.

The object of the present invention is, therefore, to provide a head-mounted display which is certain not to disturb the driver's perception of the outside world if an electronic video signal supplied to it, which represents a calculated image to be superimposed upon the real-world image, is unintelligible or defective.

This object is achieved in general by a head-mounted display comprising electro-optic display means for receiving an electronic video signal, generating, from said electronic video signal, a luminous signal and displaying to a user a superimposed image, in which the luminous signal is perceptible by a user in superposition with a real-world image, which head-mounted display is characterized by control means for judging, based on said electronic video signal, a degree of alienation of the real-world image caused by the superposition and for reducing, at least temporarily, the impact of the luminous signal on the superimposed image.

The way in which the luminous signal can alienate the real-world image depends on the overall design of the electro-optic display means. A first type of such display means comprises a screen, e.g. a semi-transparent mirror, the degree of transparency of which is locally controllable, and a driver circuit for controlling the degree of transparency of said screen based on said video signal. It would be conceivable to generate a luminous signal and to superimpose it with the real-world image by merely controlling the degree of transparency of the screen. In that case, pixels rendered non-transparent based on the video signal would appear as a dark silhouette superimposed on the real-world image. In that case, it is appropriate if the control means is adapted to judge the impact of the luminous signal on the superimposed image based on a degree of transparency of at least a predetermined portion of the screen encoded in the video signal and to reduce said impact in at least said predetermined portion if said degree of transparency is below a predetermined threshold. In that case, e.g. a defective video signal which would make the entire screen or at least substantial portions thereof non-transparent can be detected and intercepted.

In the simplest case, the predetermined portion might be the entire screen. If the predetermined portion is less than the entire screen, an insufficient degree of transparency may cause the controller to reduce the impact of the luminous signal only in that same screen portion. Based on the assumption that if the luminous signal is found to be defective by the controller only in said predetermined portion, it is likely that it will be meaningless for a user outside said predetermined portion, too, it may be appropriate for the controller to reduce the impact of the luminous signal in a larger area of the screen than said predetermined portion, preferably in the entire screen.

When judging the degree of transparency of the screen, it may be appropriate not to weight all of its regions in the same way. In particular, since a driver tends to place objects which attract his attention in the centre of his field of view, a screen region corresponding to this centre of the field of view should be influenced only sparingly by the luminous signal. I.e. when judging the degree of alienation of the real-world image, a non-transparent pixel in such a region should reduce said degree of transparency more strongly than a non-transparent pixel in another, less central region of the driver's field of view.

Of course, a head-mounted display may also comprise a light source for contributing to the luminous signal and a driver circuit for controlling the luminosity of said light source based on said video signal. The light source can e.g. be a projector illuminating pixels of the above mentioned screen controlled to be non-transparent or to have a less than maximum degree of transparency, so that these pixels may appear bright to a user. Other types of head-mounted displays exist in which a light source projects an image directly, without reflection on a screen or mirror, onto the user's retina. Such a display may have a screen with a locally controllable degree of transparency, for shielding off ambient light from those areas of the retina which will receive light from the light source, but it is also conceivable for such a device not to use a screen at all, so that predetermined regions of the retina will receive both ambient light and light from the light source. As a further alternative, a semi-transparent mirror having a constant degree of transparency might be used for superimposing a luminous signal exclusively contributed by the light source upon a real-world image. In these latter cases, the control means is preferably adapted to judge the impact of the luminous signal based on the luminosity of said light source in at least a predetermined portion of the superimposed image and to reduce said impact at least in said predetermined portion if the luminosity is above a predetermined threshold.

In analogy to what has been described above, said portion or the entire superimposed image may be divided into predetermined regions, an illuminated pixel in one of these regions contributing more to said luminosity than does an illuminated pixel in another one of said regions.

In order to prevent dazzling the user by the light from said light source, it is useful for the head-mounted display to comprise an environment lighting sensor, the control means being adapted to set the predetermined threshold depending on environment brightness detected by said environment lighting sensor.

Since the human eye easily adapts to different brightness levels in different regions of an image, the environment lighting sensor may be adapted to provide spatially resolved brightness data associated to different locations of the real-world image, and the control means is adapted to set the luminosity threshold at a given location of the superimposed image based on the environment brightness at said location. In that case, a higher brightness of the light source can be admitted in regions of the superimposed image where it must be perceptible on a bright background, whereas a lower brightness of the light source is allowed where it is superimposed on a dark portion of the real-world image, in order to avoid dazzling. In principle, an electronic camera might be used as said spatially-resolving lighting sensor.

For reducing the impact of the luminous signal, various approaches can be conceived, for example stopping the generation of the luminous signal altogether, reducing a duty cycle at which said luminous signal is intermittently generated, or reducing the amplitude of the luminous signal, either in the entire superimposed image or only in a predetermined portion thereof. The way in which the amplitude of the luminous signal can be reduced depends on the nature of the luminous signal: if it is a modulation of the degree of transparency of a screen, the controller may cause this transparency reduction to be less than what is specified in the video signal, whereas if the luminous signal is light from a light source, the brightness of the light source may be reduced.

The display of the invention may comprise an alarm means for issuing a warning to a user if the controller has become active to reduce said impact, so that the user will be aware of the controller's intervention and can react properly.

It can be appropriate to adapt the alarm means to issue the warning only if the controller has been active for a predetermined time. In particular if the source of the video signal is in itself reactive to the real-world images seen by a user, the controller can thus be prevented from issuing a warning during a delay time the video signal source needs for adapting to a change in the real-world images. E.g. when a car driver enters a tunnel, it may be necessary to reduce the brightness of the luminous signal in order to prevent him from being dazzled by the luminous signal and to allow his eyes to adapt to the low level of light in the tunnel. In such a case, the controller can become active to reduce the brightness of the light source or to temporarily switch it off until the brightness of the video signal received by it has adapted to the new environment lighting conditions.

Further features and advantages of the present invention will become apparent from the subsequent description of its preferred embodiments, referring to the appended drawings, in which:
- Fig. 1: is a block diagram of a head-mounted display used in a driver assistance system of a motor vehicle;
- Fig. 2: is an example of a superimposed image as seen by a wearer of the HMD of Fig. 1;
- Fig. 3: is a block diagram of the HMD according to first embodiments; and
- Fig. 4: is a block diagram of the HMD according to a second embodiment.

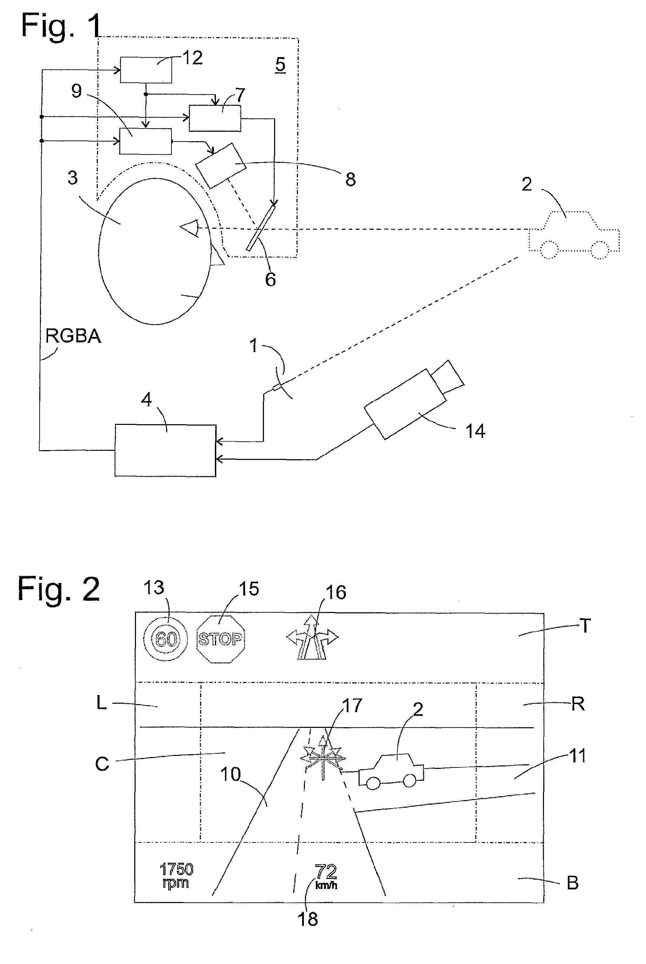

Fig. 1 is a schematic diagram showing an application environment of a head-mounted display (HMD) and some of its components. A motor vehicle, not shown, features a set of radar antennas 1 for emitting microwave radiation and receiving reflected radiation from objects in the environment of the motor vehicle, e.g. by a second vehicle in front of the vehicle carrying the radar system, which may not be clearly visible to a driver 3 due to fog, heavy snowfall, frost on the windscreen or other reasons. A computer-based rendering engine 4 is connected to the radar antennas 1 and is programmed to calculate outlines of objects that reflect the microwave radiation, such as vehicle 2, as these objects would appear to the eye of the driver 3, and to convert these outlines into an electronic video signal according to any appropriate conventional standard suitable for displaying on a conventional computer monitor, a head-mounted display or any other conventional display device.

Besides the shapes of microwave-reflecting objects, other types of information may be comprised in the images generated by rendering engine 4. E.g. there may be predefined regions in these images for displaying instrument readings, enabling the driver 3 to take note of the status of operation of his vehicle without having to look at dashboard instruments, such as a speedometer, a revolution counter, a fuel gauge etc. There may be regions defined for displaying information generated e.g. by a navigation system, etc. A more elementary type of rendering engine 4 may not have radar antennas and be adapted only to display instrument readings and/or navigation information.

Further, the rendering engine 4 may be connected to a video camera 14 generating a stream of images of the road in front of the vehicle from a perspective similar to that of the driver 3, and it may comprise image processing software for extracting and identifying traffic signs in these images and for displaying an identified traffic sign to the driver 3 as long as it is valid.

The video signal provided by rendering engine 4 may e.g. be an RGBA signal, i.e. it comprises four items of data associated to each pixel of a generated image, the four items defining colour values in red (R), green (G), blue (B) of the pixel and, additionally, its degree of transparency (A).

The video signal from rendering engine 4 is received by a HMD 5 worn by the driver 3. The HMD 5 shown as an example in Fig. 1 comprises a semi-transparent screen 6 in front of the driver's eyes, through which he sees the outside world. The screen 6 is divided into an array of pixels, formed e.g. by LCD elements, the degree of transparency of which is controlled individually by a screen driver circuit 7. By switching specific pixels into a non-transparent or only partially transparent state, as specified by the "A" component of the RGBA signal, the screen driver circuit 7 can cause dark or black shapes to appear in the field of view of the driver 3 with the real outside world as a background.

A controllable light source 8 is arranged to emit light which is reflected off the screen 6 into the driver's eye. The light source 8 may comprise an array of luminous elements, such as LEDs arranged in rows and columns in a one-to-one relationship with the pixels of the screen 6, and a lens for imaging the array of LEDs onto the screen 6 such that the driver will see a sharp image of those LEDs of the array which actually emit light when his eyes are focussed to infinity. A light source driver circuit 9 drives the LEDs of the array based on components R, G, B of the received video signal so that from the driver's point of view the light of the LEDs appears to originate from those pixels of screen 6 which have their degree of transparency reduced.

Alternatively, the light source 8 might comprise point-shaped luminous elements such as LEDs or low power laser diodes in red, green and blue, the light of which is deflected by horizontal and vertical scanners so as to write an image directly on those points of the driver's retina that have the reduced transparency pixels of screen 6 imaged onto them.

A controller circuit 12 receives the RGBA signal, judges its quality and controls the operation of drivers 7, 9 based on the result of the judgment as will be described in more detail below.

Fig. 2 is an example of a superimposed image as it might be seen by driver 3 wearing the HMD 5. Through screen 6, the driver sees a real-world image, incidentally a landscape with a road 10 in front of his vehicle, a crossroad 11 coming from the right, and a vehicle 2 in waiting. The area of the screen 6 is divided into portions denoted C for centre, L for left, R for right, T for top and B for bottom, respectively. Region T of the images formed by rendering engine 4 is reserved for road-related information, e.g. a speed limit sign 13 which has been detected by engine 4 in an image from camera 14. The speed limit sign 13 may appear continuously in the images from engine 4, until an end to the speed limit or a new, different speed limit is detected, or it may be displayed only if the current speed of the vehicle is close to or above the speed limit.

Other signs which may be displayed if detected along the road are a stop sign 15, a no passing sign, etc. Further, arrows 16 of various shapes may be displayed in region T, indicating, based on information from a conventional navigation system, a recommended direction to take at the next crossroads.

Portions L, R are empty in the images from rendering engine 4 under normal operation. In the central region C, small arrows 17 may be displayed while the vehicle is in the immediate vicinity of a crossroad, in order to remind the driver 3 of the correct direction to take. Since the arrows 17 appear in a central region of the driver's field of vision, they should be small and unobtrusive, in order not to prevent him from seeing other important details of the road 10 in front of him.

When the radar antennas 1 are active, outlines of objects such as the vehicle 2 will be shown in the C region of images from the rendering engine 4, in order to help the driver recognize it if real world visibility is poor.

In the bottom region, important instrument readings are shown, e.g. an indication 18 of the current vehicle speed and all kinds of warnings conventionally displayed on a vehicle dashboard, indicating low fuel, low battery power, etc.

Based on the kinds of information shown in the different portions T, C, B of screen 6, it is possible to estimate what the maximum percentage of non-transparent pixels in each of the screen portions should be. If the amount of non-transparent pixels in the video signal received by HMD 5 is substantially larger than this estimated amount, it is reasonable to assume that rendering engine 4 is not operating properly. In such a case it must be ensured that the HMD 5 will not block the driver's view of the outside world.

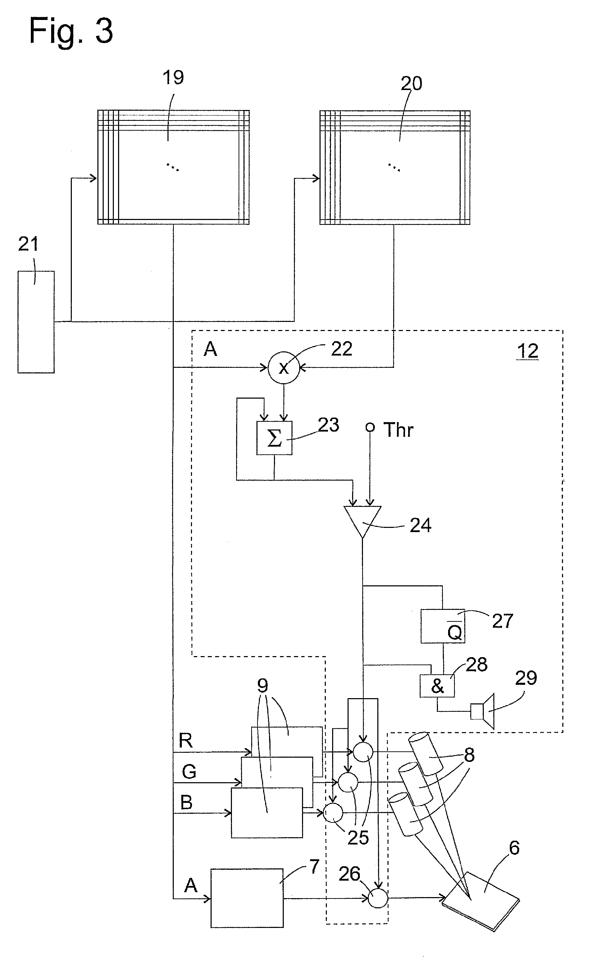

Fig. 3 is a block diagram of a HMD designed to satisfy this requirement. It should be noted that in contrast to the rendering engine 4 which will usually be designed as an appropriately programmed microprocessor system, the electronic components of HMD 5 are hard-wired, making them substantially more reliable. Components of controller 12 are surrounded by a dashed outline.

In Fig. 3, 19 is a read/write memory storing R, G, B and A data of a current image received from engine 4 on a pixel by pixel basis. A second memory 20 stores weighting coefficients associated to each image pixel. Memory 20 is a read only memory, having its coefficients written into it by the manufacturer of the HMD 5. The coefficients associated to each pixel depend on the image portion C, L, R, T or B to which the pixel belongs.

The cells of memory blocks 19, 20 are periodically addressed by address generator 21, causing memory block 19 to output R, G, B and A data of an addressed pixel and memory block 20 to output its associated weighting coefficient. R, G, B data are received by light source driver circuits 9 associated to red, green and blue light sources 8 which irradiate screen 6. "A" data can take any value from 0 to 1, A=0 standing for a perfectly transparent pixel and A=1 for complete opaqueness. The A data are received by screen driver circuit 7, and by a first input of a multiplier 22, the second input of which receives the weighting coefficient of the currently addressed pixel from memory block 20. Products generated by multiplier 22 are received at a first input of an adder 23 which has its output looped back to its second input. The adder 23 is reset whenever address generator 21 begins to scan an image in the memory blocks 19, 20, and when the address generator 21 has finished a scan, adder 23 stores a weighted value which is representative of the degree of alienation that will be caused by the image stored in memory block 19 if superimposed upon a real-world image.

A Comparator 24 compares this weighted sum to a predetermined threshold Thr. The output of comparator 24 controls switches 25 between the light source driver circuits 9 and their associated light sources 8, and a switch 26 between screen driver circuit 7 and screen 6.

If the output of adder 23 is less than the threshold Thr after a stored image has been scanned, the switches 25, 26 are closed, and light sources 8 and screen 6 are controlled by the respective driver circuits 9, 7 in a conventional way. When the output of adder 23 exceeds threshold Thr, the switches 25, 26 may simply become open, causing the light sources 8 to go dark and screen 6 to become transparent all over. The HMD 5 thus stops to display images from rendering engine 4 completely, until a new image is received from engine 4 which no longer exceeds the threshold Thr. Alternatively, in case of the output of adder 23 exceeding threshold Thr, the switches 25, 26 might toggle at a high frequency, so that the images of the rendering engine 4 will still be displayed in HUD 5, but the degree of transparency of the screen pixels is less than specified in the A component of the video signal from engine 4, and the luminosity of the light sources 8 is less than specified in the R, G and B components. In this way, a driver would not be completely deprived of information from the rendering engine 4, but objects in these images would appear partly transparent, allowing the driver 3 to see through these objects and still to perceive the real world behind.

A monoflop 27 is triggered by a change of state at the output of comparator 24 caused if the output of adder 23 rises above the threshold Thr. A negated output *Q̅* of monoflop 27 is connected to a first input of an AND gate 28, the second input of which is directly connected to the output of comparator 24. The output of AND gate 28 thus becomes "true" if the output of adder 23 has been above threshold Thr for more than the delay time of monoflop 27 and activates an alarm, e.g. an earphone 29 in HMD 5, that will warn the driver of a failure in rendering engine 4.

The weighting coefficients in memory block 20 associated to the various portions of screen 6 reflect the fraction of the surface of each of these portions which the images from rendering engine 4 are allowed to occupy. Since rendering engine 4 must not use portions LR, weighting coefficients for these regions can be set so high that a single non-transparent pixel in these portions is sufficient to cause the threshold Thr to be exceeded. For the other portions, coefficients are set so that the output of adder 23 falls just short of threshold Thr if the percentage of non-transparent pixels is as high as could reasonably be expected when rendering engine 8 is operating normally.

As described above, adder 23 evaluates the amount of non-transparent pixels in the entire screen 6. Of course, evaluation might be restricted to any of portions C, L, R, T, B, with an appropriate threshold Thr set for each of these portions, and if the threshold is exceeded in any of these portions, displaying of images from rendering engine 4 might be suspended or reduced in amplitude only in the concerned portion of the screen or in the entire screen.

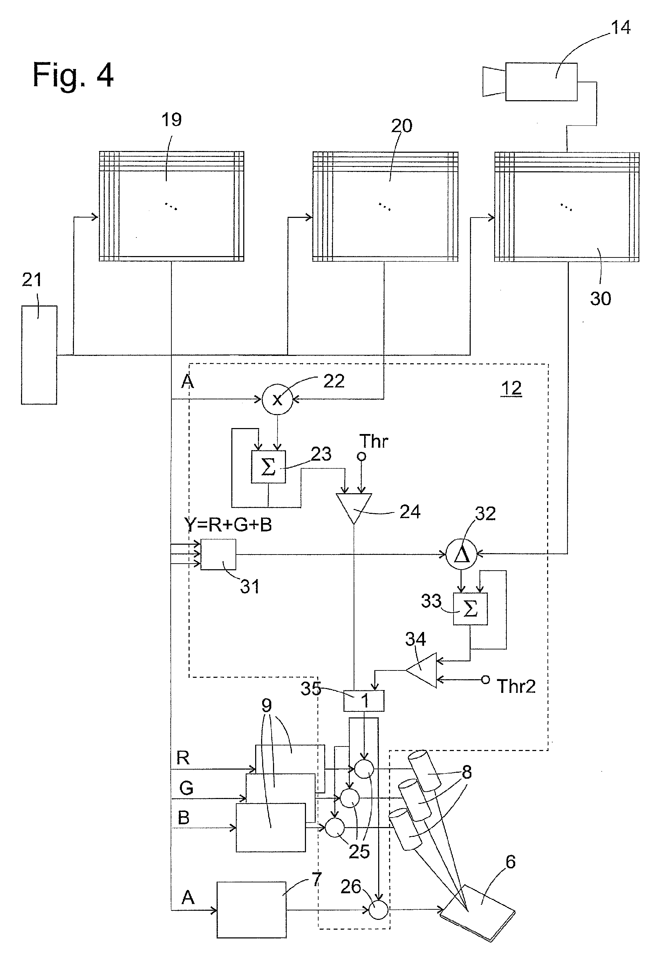

A block diagram of a head-mounted display according to a second embodiment of the invention is shown in Fig. 4. In this embodiment, a third memory block 30 is provided in addition to memory blocks 19, 20 described above, and is connected to a camera, preferably to the same camera 14 that is used by rendering engine 4 for traffic sign recognition, for storing images from said camera. In the embodiment of Fig. 4 it is assumed that only gray-scale data Y are stored in memory block 30, but an extension of the concepts of this embodiment to a memory block 30 storing R, G, and B data will be obvious to the man of the art.

Memory block 30 is addressed by the same address generator 21 as are memory blocks 19, 20. A converter 31 is connected to memory block 19 for converting RGB data of a currently addressed pixel from memory block 19 into gray-scale data. A difference circuit 32 has inputs connected to memory block 30 and to converter 31, and outputs data representative of a luminosity difference between the addressed pixels in memories 19 and 30, i.e. between a pixel of the image from rendering engine 4 and a pixel of the real world picture as is seen by camera 14 and as would be seen by driver 3 at the currently adressed pixel of screen 6 if this pixel was transparent in the image from rendering engine 4.

If there are too many pixels in the image from rendering engine 4 which are much brighter than the corresponding pixels in the real-world image, there is a risk of the driver being dazzled. This risk is evaluated by a fedback adder 33 connected to the output of difference circuit 32 and a comparator 34 which compares the output of adder 33 to a second threshold Thr2. The comparator 34 outputs a "true" logic signal when the output of adder 33 exceeds the threshold Thr2.

An OR gate 35 is connected between the outputs of comparators 24, 34 and the inputs of switches 25, 26, so that the switches 25, 26 will open or toggle if at least one of the two thresholds Thr, Thr 2 is exceeded. The embodiment of Fig. 4 thus prevents an obstruction of the driver's vision both by an image from the rendering engine 4 occupying too much screen space as well as by an inappropriate brightness level of this image.

Of course, warning circuitry such as components 27, 28, 29 shown in Fig. 3 may also be provided in the embodiment of Fig. 4.

Further, one or more storage cells may be associated to each adder 23, 33 in the embodiments of Fig. 3 and 4 for storing outputs of these adders obtained with previous pictures from rendering engine 4. An abrupt increase in brightness or in the area occupied by non-transparent pixels, which might be indicative of a failure of rendering engine 4, may be detected by comparing differences present and previous outputs with appropriately set thresholds, causing switches 25, 26 to open.

## Claims

1. A head-mounted display (5) comprising electro-optic display means (6-9) for receiving an electronic video signal (RGBA), generating, from said electronic video signal (RGBA), a luminous signal and displaying to a user (3) a superimposed image in which the luminous signal is perceptible by the user in superposition with a real-world image, **characterized by** control means (12; 22-35) for judging, based on said electronic video signal (RGBA), a degree of alienation of the real-world image caused by the superposition and for reducing, at least temporally, the impact of the luminous signal on the superimposed image.

2. The head-mounted display of claim 1, wherein the electro-optic display means (6-9) comprise a screen (6), the degree of transparency of which is locally controllable for at least contributing to the luminous signal, and a driver circuit (7) for controlling the degree of transparency of said screen (6) based on said video signal, and the control means (12; 22-35) is adapted to judge said impact based on a degree of transparency of at least a predetermined portion of the screen (6) encoded in the video signal (RGBA) and to reduce said impact at least in said predetermined portion if the degree of transparency is below a predetermined threshold (Thr).

3. The head-mounted display of claim 2, wherein said portion or said screen (6) has pre-determined regions (T, L, C, R, B) and wherein a non-transparent pixel in one of these regions (T, L, C, R, B) contributes more to said degree of transparency than does a non-transparent pixel in another one of said regions.

4. The head-mounted display of any of the preceding claims, wherein the electro-optic display means (6-9) comprise a light source (8) for contributing to the luminous signal and a driver circuit (9) for controlling the luminosity of said light source (8) based on said video signal (RGBA), and the control means (12; 22-35) is adapted to judge the impact based on the luminosity of said light source (8) in at least a predetermined portion of the superimposed image and to reduce said impact at least in said predetermined portion if the luminosity is above a predetermined threshold (Thr2).

5. The head-mounted display of claim 4, wherein the said portion or said superimposed image has predetermined regions (T, L, C, R, B), and wherein an illuminated pixel in one of these regions (T, L, C, R, B) contributes more to said luminosity than does an illuminated pixel in another one of said regions.

6. The head-mounted display of claim 4 or 5, further comprising an environment lighting sensor (14), the control means (12; 22-35) being adapted to set the predetermined threshold depending on environment brightness detected by said environment lighting sensor.

7. The head-mounted display of claim 6, wherein the environment lighting sensor (14) provides spatially resolved brightness data associated to different locations of the real-world image, and wherein the control means (12; 22-35) is adapted to set the luminosity threshold at a given location of the superimposed image based on the environment brightness at said location.

8. The head-mounted display of any of the preceding claims, wherein the control means (12; 22-35) is adapted to determine a time derivative of the degree of alienation and to reduce said impact if said derivative exceeds a predetermined threshold.

9. The head-mounted display of any of the preceding claims, wherein the control means (12; 22-35) is adapted to reduce said impact by at least one of the following measures:
a) stopping generation of said luminous signal;
b) reducing a duty cycle at which said luminous signal is intermittently generated;
c) reducing the amplitude of said luminous signal at least in a pre-determined portion of the superimposed image.

10. The head-mounted display of any of the preceding claims, further comprising an alarm means (29) for issuing a warning to the user if the control means (12; 22-35) has become active to reduce said impact.

11. The head-mounted display of claim 9, wherein the alarm means (29) is adapted to issue said warning only if said control means (12; 22-35) has been active for a predetermined time.
